# EUROPÄISCHE PATENTSCHRIFT

(11) **EP 1 262 935 B1**
(45) Veröffentlichungstag und Bekanntmachung des Hinweises auf die Patenterteilung: **22.03.2006**
(21) Anmeldenummer: 01113309.7
(22) Anmeldetag: 31.05.2001
(51) Int. Cl.: G08G 1/09, H04L 12/28

(54) **Verfahren zum Austausch von Statusinformationen über direkte Funkverbindungen zwischen Teilnehmer-Endgeräten**
Method for exchanging of status informations via direct radio connections between subscriber terminals
Procédé pour échanger des informations d'état via des connexions radio directes entre des terminaux d'abonné

(43) Veröffentlichungstag der Anmeldung: 04.12.2002
(73) Patentinhaber: SIEMENS AKTIENGESELLSCHAFT, 80333 München (DE)
(72) Erfinder: Ebner, Andre, 21073 Hamburg (DE); Halfmann Ruediger, 67697 Otterberg (DE); Lott, Matthias, 81477 München (DE); Rohling, Hermann Prof., 38304 Wolfenbüttel (DE)

(56) Entgegenhaltungen:
- EP-A- 0 201 461
- EP-A- 0 860 954
- EP-A- 0 897 168
- EP-A- 0 915 446
- WO-A-00/46777
- DE-A- 4 034 681
- GB-A- 2 358 506

## Beschreibung

Die vorliegende Erfindung betrifft ein Verfahren zum Austausch von Statusinformationen enthaltenden Datenpaketen zwischen Teilnehmer-Endgeräten eines Datenfunksystems. Es kann sich für bestimmte Anwendungen innerhalb von Datenfunksystemen die Notwendigkeit ergeben, zwischen Teilnehmer-Endgeräten des Datenfunksystems Statusinformationen auszutauschen. Diese Statusinformationen können beispielsweise über den aktuellen oder historischen Betriebszustand der Teilnehmer-Endgeräte oder über sonstige Einrichtungen, die datentechnisch mit den Teilnehmer-Endgeräten verbunden sind, oder auch über die Umgebungssituation der Teilnehmer-Endgeräte Aufschluss geben.

Ein Beispiel für die Generierung solcher Statusinformationen ist die Erstellung und Verarbeitung von Verkehrsinformationen für Fahrzeuge. So ist es beispielsweise aus EP 0 815 547 bekannt, dass Teilnehmer-Endgeräte eines zellularen Funksystems Statusinformationen über die Position, den Fahrtverlauf, den Fahrzeugzustand und die Umgebungssituation des Fahrzeuges an eine Dienstezentrale weiterleiten, die die einzelnen Informationen auswertet und auf Basis der Auswertung entsprechende Verkehrsmeldungen an die Teilnehmer-Endgeräte aussendet. Im Falle eines Notfalles kann auch eine Notfallwarnung unabhängig von der Dienstezentrale über die netzseitige zentrale Sendeeinrichtung einer Funkzelle weitergeleitet werden.

Nachteilig an einem solchen System ist jedoch, dass zwangsläufig eine flächendeckende Netzinfrastruktur eines zellularen Funksystems bereitgestellt werden muss, das zusätzlich Einrichtungen zur Erfassung und Verarbeitung von Statusinformationen aufweisen muss, insbesondere durch eine speziell bereitzustellende Dienstezentrale. Auch ergeben sich zeitliche Verzögerungen für die Weiterleitung der Verkehrsinformationen an Teilnehmer-Endgeräte aufgrund der mehrstufigen Datenübertragungswege.

Aus der WO 00/46777 A1 ist ein Verfahren zur dynamischen Routenoptimierung bekannt, bei dem dynamisch relevante Verkehrsdaten zwischen entgegenkommenden Fahrzeugen ausgetauscht werden.

Aus der EP 0 915 446 A2 ist ein Verkehrsleit-, Informations- und Positionierungssystem bekannt, bei dem dynamische Verkehrsinformationen und/oder -ereignisse von Endgeräten im Fahrzeug aufgenommen und zusammen mit einer Ortsinformation verknüpft an andere Verkehrsteilnehmer weitergeleitet werden.

Aufgabe der vorliegenden Erfindung ist es daher, eine vereinfachte und verbesserte Möglichkeit zum Austausch von Statusinformationen enthaltenden Daten zwischen Teilnehmer-Endgeräten eines Datenfunksystems bereitzustellen. Diese Aufgabe wird gelöst durch die Merkmale der unabhängigen Patentansprüche 1 und 8. Weiterbildungen der Erfindung sind abhängigen Patentansprüchen entnehmbar.

Bei dem erfindungsgemäßen Verfahren zum Austausch von Statusinformationen enthaltenden Datenpaketen zwischen Teilnehmer-Endgeräten eines Datenfunksystems ist vorgesehen, dass die Übertragung der Datenpakete zu definierten Sendezeitpunkten über direkte Funkverbindungen zwischen einem ersten, sendenden Teilnehmer-Endgerät und mindestens einem zweiten, empfangenden Teilnehmer-Endgerät erfolgt. Es wird also keinerlei feste Netzinfrastruktur vorgesehen, sondern es kommunizieren im Sinne eines dezentralen Ad-Hoc Netzes die einzelnen Teilnehmer-Endgeräte direkt miteinander, um die Statusinformationen untereinander auszutauschen. Als Datenfunksystem zur Realisierung der Erfindung kann grundsätzlich jede geeignete Art von Funksystemen zur Übertragung von Daten bzw. Datenpaketen gewählt werden. Zumindest ein Teil der Statusinformationen wird in jedem Teilnehmer-Endgerät bis zum nächsten Sendezeitist, wenn keine direkte Funkverbindung von dem ersten Teilnehmer-Endgerät zu dem mindestens einen dritten Teilnehmer-Endgerät möglich ist. Damit wird sichergestellt, dass die Statusinformationen nicht nur denjenigen Teilnehmer-Endgeräten zur Verfügung stehen, die sich in unmittelbarer Kommunikations-Reichweite des ersten Teilnehmer-Endgerätes befinden, sondern es können weit mehr Teilnehmer-Endgeräte erreicht werden, idealerweise bis hin zu einer flächendeckenden Versorgung. Als Statusinformationen kommen insbesondere die eingangs genannten Arten von Statusinformationen in Frage.

Weiterhin ist erfindungsgemäß vorgesehen, dass zumindest ein Teil der Statusinformationen in Form von Datenpaketen von jedem Teilnehmer-Endgerät in regelmäßigen Zeitintervallen ausgesendet und/oder weitergeleitet wird. Damit wird erreicht, dass die anderen Teilnehmer-Endgeräte immer auf einem weitgehend aktuellen Stand über den betreffenden Status gehalten werden. Die Zeitintervalle können an die speziellen Bedürfnisse des jeweiligen Status angepasst werden, wobei diese Anpassung grundsätzlich auch dynamisch erfolgen kann.

Zudem werden erfindungsgemäße in jedem Teilnehmer-Endgerät Statusinformationen unterschiedlicher Priorität definiert, wobei Statusinformationen niedrigerer Priorität in regelmäßigen Zeitintervallen ausgesendet und/oder weitergeleitet werden und Statusinformationen hoher Priorität unverzüglich ausgesendet und/oder weitergeleitet werden. Damit kann flexibler auf bestimmte Situationen reagiert werden, die eine schnellere oder weniger schnelle Aussendung und/oder Weiterleitung der entsprechenden Statusinformationen erfordern.

Wird allerdings bei einem Datenfunksystem eine Weiterleitung der Statusinformationen durch die Teilnehmer-Endgeräte vorgesehen, so kann dies - vor allem bei einer großen Zahl von Teilnehmer-Endgeräten und umfangreichen Statusinformationen - zu einem übermäßigen Datenaufkommen führen. Dem kann in einer speziellen Weiterbildung der Erfindung jedoch dadurch begegnet werden, dass in jedem Teilnehmer-Endgerät auf Basis von bisher vorhandenen Statusinformationen und/oder den zwischen zwei Sendezeitpunkten von mindestens einem weiteren Teilnehmer-Endgerät empfangenen Statusinformationen eine Auswertung der Statusinformationen durchgeführt wird, in Abhängigkeit von dem Ergebnis der Auswertung aktualisierte, komprimierte Statusinformationen generiert werden und die aktualisierten, komprimierten Statusinformationen zum nächsten Sendezeitpunkt an mindestens ein weiteres Teilnehmer-Endgerät übertragen werden. Dabei ist es nicht zwangsläufig erforderlich und eventuell auch nicht immer möglich, dass ein Teilnehmer-Endgerät stets Statusinformationen von anderen Teilnehmer-Endgeräten empfängt. Es kann die Generierung der aktualisierten und gleichzeitig komprimierten Statusinformationen auch allein aufgrund der bisher im Teilnehmer-Endgerät vorliegenden Statusinformationen erfolgen.

Die Generierung aktualisierter und gleichzeitig komprimierter Statusinformationen ist insbesondere dann möglich, wenn die vorliegenden Statusinformationen und/oder die Statusinformationen mehrerer Teilnehmer-Endgeräte zu einer vereinheitlichten Statusinformation, also über einen Gesamtstatus, zusammengefasst werden können, der dann durch eine entsprechend komprimierte Statusinformation repräsentiert werden kann, die folglich nur noch einen deutlich geringeren Datenaufwand bei deren Aussendung erfordert, als die Summe der Daten der ursprünglichen Statusinformationen. Es können speziell zur Komprimierung der Statusinformationen die vorliegenden und/oder empfangenen Statusinformationen mit gespeicherten Statusszenarien verglichen und mindestens einem der gespeicherten Statusszenarien zugeordnet werden und die Statusinformationen des entsprechenden Statusszenarios als komprimierte Statusinformationen weitergeleitet werden.

Wie bereits eingangs beschrieben können Statusinformationen für verschieden Anwendungen in einem Datenfunksystem eine Rolle spielen. Insbesondere können die Statusinformationen Informationen über den aktuellen und/oder historischen Status eines Fahrzeuges enthalten, also zu einer Analyse einer Fahrzeugsituation, Fahrzeug-Umgebungssituation oder Verkehrssituation dienen. So können beispielsweise die Statusinformationen des Fahrzeuges zumindest Informationen mit niedrigerer Priorität über mindestens einen Teil des Fahrtverlaufes (z.B. aktuelle Position, Fahrtrichtung, Geschwindigkeit) und der Umgebungssituation (z.B. bestimmte Sensordaten, lokale Verkehrssituation) des Fahrzeuges enthalten. Diese Informationen niedrigerer Priorität können dann, wie vorstehend beschrieben, im Rahmen regelmäßiger Aussende- und/oder Weiterleiteprozeduren an andere Teilnehmer-Endgeräte des Datenfunksystems weitergeleitet werden.

Zusätzlich kann vorgesehen werden, dass bei Auftreten einer Notfallsituation Statusinformationen mit hoher Priorität ausgesendet werden, die zumindest Informationen über die Notfallart (z.B. Grund für Auslösung der Notfallmeldung) und über mindestens einen Teil des Fahrtverlaufes des Fahrzeuges (z.B. Position, Fahrtrichtung) enthalten. Schließlich können die Statusinformationen auch zusätzlich Informationen über den Status des Teilnehmer-Endgerätes, insbesondere über bestehende oder gewünschte Datenfunkverbindungen zu anderen Teilnehmer-Endgeräten enthalten. So können beispielsweise Kanalanforderungen bzw. Reservierungswünsche für Übertragungskapazitäten im Rahmen von Statusinformationen weitergeleitet werden

Die vorliegende Erfindung umfasst außerdem ein Teilnehmer-Endgerät zum Austausch von Statusinformationen enthaltenden Datenpaketen mit weiteren Teilnehmer-Endgeräten eines Datenfunksystems, welches zumindest eine Einrichtung zum Datenaustausch über direkte Funkverbindungen mit weiteren Teilnehmer-Endgeräten aufweist. Mit Hilfe eines solchen Teilnehmer-Endgerätes können auf einfache Weise Statusinformationen zwischen verschiedenen Teilnehmer-Endgeräten ausgetauscht werden.

Zusätzlich kann das Teilnehmer-Endgerät eine Einrichtung zur Auswertung von empfangenen Statusinformationen, eine Einrichtung zur Generierung komprimierter Statusinformationen in Abhängigkeit von dem Ergebnis der Auswertung und eine Einrichtung zur Weiterleitung der komprimierten Statusinformationen an mindestens ein drittes Teilnehmer-Endgerät aufweisen, um die zu übertragende Datenmengen möglichst weitgehend zu reduzieren. All diese Einrichtungen können durch bereits im Teilnehmer-Endgerät vorhandene, gegebenenfalls entsprechend angepasste Einrichtungen oder auch durch zusätzliche Einrichtungen realisiert werden, wobei grundsätzlich mehrere dieser Einrichtungen auch in einer Einrichtung funktionell zusammengefasst werden können.

Für eine spezielle Anwendung eines vorgenannten Teilnehmer-Endgerätes für Zwecke einer Fahrzeug- und/oder Verkehrs-Analyse kann eine datentechnische Verbindung von dem Teilnehmer-Endgerät zu einer Einrichtung zur Erfassung von Statusinformationen über den aktuellen und/oder historischen Status eines Fahrzeuges vorgesehen werden.

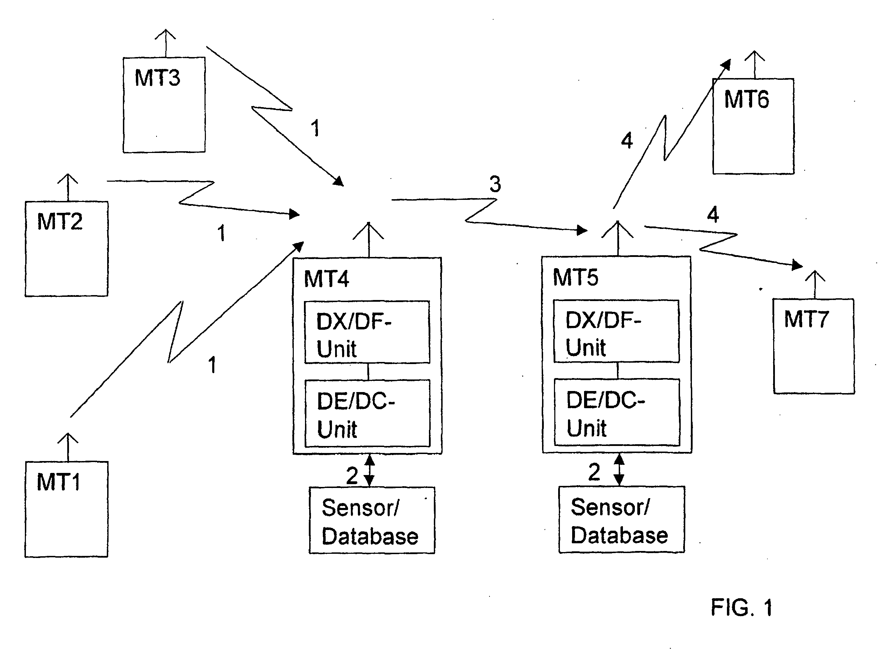

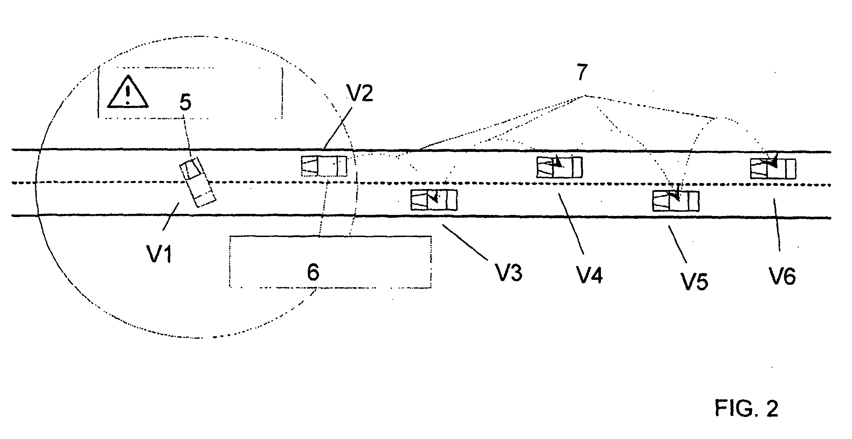

Ein spezielles Ausführungsbeispiel der vorliegenden Erfindung wird nachfolgend anhand der Figuren 1 und 2 erläutert.

Es zeigen:
- FIG. 1:: Schematische Darstellung eines erfindungsgemäßen Ad-Hoc-Datenfunknetzes zur Weiterleitung von Verkehrsinformationen
- FIG. 2:: Schematische Darstellung der Weiterleitung einer Notfallmeldung mit Hilfe eines Datenfunknetzes nach FIG. 1

Das in FIG. 1 dargestellte Datenfunknetz gemäß der vorliegenden Erfindung umfasst - im Gegensatz zu den eingangs genannten zellularen Funksystemen - lediglich beliebig viele mobile Teilnehmer-Endgeräte (mobile Terminals) MT1, MT2,...MT7, die nach Art eines Ad-Hoc-Netzes direkt miteinander kommunizieren und dabei untereinander Statusinformationen austauschen, die vor allem Verkehrsinformationen für Fahrzeuge beinhalten. Neben den Teilnehmer-Endgeräten MT1, MT2,...MT7 ist keine weitere Netzinfrastruktur erforderlich.

Wie in FIG. 1 am Beispiel der Endgeräte MT4 und MT5 dargestellt, beinhalten die Endgeräte einerseits Einrichtungen zum Datenaustausch bzw. zur Weiterleitung von empfangenen Daten an weitere Endgeräte (Data Exchange / Data Forwarding Unit, DX/DF-Unit), andererseits Einrichtungen zur Auswertung und Kompression von empfangenen Daten vor deren Weiterleitung (Data Evaluation / Data Compression Unit, DE/DC-Unit). Schließlich weisen die Endgeräte eine unidirektionale oder bidirektionale datentechnische Verbindung 2 zu Sensoren (Sensor) und/oder Datenbanken (Database) auf, die zur Erfassung von aktuellen und/oder historischen Verkehrsinformationen als Statusinformationen von Fahrzeugen dienen. Die Endgeräte MT1, MT2,...MT7 sind jeweils in ein Fahrzeug integriert.

Jedes Endgerät MT1, MT2,...MT7 sendet regelmäßig Datenpakete mit Statusinformationen niedriger oder normaler Priorität an alle umliegenden Endgeräte, wobei die Statusinformationen Verkehrsinformationen beinhalten, insbesondere
- Fahrzeugdaten wie Position, Geschwindigkeit, Fahrtrichtung
- zusätzliche Sensordaten, z.B. über den Fahrbahnzustand, Sichtverhältnisse, Wettersituation etc,
- Analyse der lokal beobachteten Verkehrssituation

Diese Informationen werden den Endgeräten MT1, MT2,...MT7 über die datentechnische Verbindung 2 bereitgestellt. Die Aussendung kann im einfachsten Fall in einem Rundsendeverfahren (Broadcast) erfolgen. Es können im Rahmen der Statusinformationen auch Informationen übertragen werden, die bestehende oder gewünschte Kommunikationsverbindungen betreffen wie z.B. Reservierungswünsche für einen selbstorganisierenden Kanalzugriff.

Der Zugriff der Endgeräte MT1, MT2,...MT7 auf die erforderlichen Übertragungskapazitäten, also den entsprechenden Funkkanal, erfolgt in einer selbstorganisierenden Form. Die Endgeräte MT1, MT2,...MT7 bilden folglich ein Ad-Hoc-Netz.

In einer Notfallsituation eines Fahrzeuges V1 (dieses Szenario ist in FIG. 2 dargestellt) sendet das zugehörige Endgerät, gesteuert über die datentechnische Verbindung 2, unverzüglich ein entsprechendes Datenpaket 5 hoher Priorität, das Notfallinformationen enthält, im Rundsendeverfahren an alle Fahrzeuge V2 in Reichweite aus (siehe schraffierte Kreisfläche in FIG. 2). Es können insbesondere folgende Informationen ausgesendet werden:
- Fahrzeug-Position, Geschwindigkeit bzw. Geschwindigkeitsverlauf, Fahrtrichtung
- Notfallart bzw. Grund für die Auslösung der Notfallmeldung, z.B. Airbag-Auslösung, Notbremsung, Vereisung der Fahrbahn

Es wird also durch eine entsprechende Sensormessung (Airbag-Auslösung, Crashsensor o.ä.) oder manuell eine Notfallsituation erkannt und die Aussendung einer entsprechenden Notfallmeldung 5 veranlasst. Die in direkter Reichweite befindlichen Fahrzeuge V2 empfangen über ihre Endgeräte MT diese Notfallmeldung, werten die empfangenen Informationen mit Hilfe der entsprechenden Einrichtungen (DE/DC-Unit) an Bord des Fahrzeuges V2 aus und es werden gegebenenfalls über datentechnische Verbindungen 2 automatisch Maßnahmen 6 in dem Fahrzeug V2 eingeleitet, um angemessen auf die Notfallmeldung 5 zu reagieren. Solche automatischen Maßnahmen 6 können beispielsweise eine automatische Geschwindigkeitsverringerung, Betätigung der Bremsen oder eine Warnmeldung an den Fahrer des Fahrzeuges V2 sein.

Damit die wichtigen Notfallinformationen auch anderen Fahrzeugen V3,...V6 außerhalb der direkten Reichweite des Endgerätes MT des Fahrzeuges V1 zur Verfügung gestellt werden können, werden, beispielsweise je nach Priorität der Notfallinformationen, entweder die ausgewerteten und gegebenenfalls entsprechend Komprimierten Notfallinformationen unmittelbar in einem - im allgemeinen mehrfachen - Weiterleitungsschritt 7 an weitere Endgeräte MT weiterer Fahrzeuge V3,...V6 weitergeleitet. Es kann aber auch die im Fahrzeug V2 ausgewertete Notfallinformation in die üblichen periodischen Statusinformationen des Fahrzeuges V2 integriert werden und dann im Rahmen der periodisch vorgesehenen Datenaussendungen des Endgerätes MT des Fahrzeuges V2 an andere Fahrzeuge V3,...V6 weitergeleitet werden, wobei auch hier die Weiterleitung 7 mehrfach an andere von Fahrzeug zu Fahrzeug erfolgen kann, wie FIG. 2 zeigt.

Die jeweilige Auswertung der empfangenen Status- bzw. Notfallinformationen entscheidet dabei auch, welche Teile der Auswertungsergebnisse an andere Endgeräte MT anderer Fahrzeuge V3,...V6 weitergeleitet werden und welche nicht. Das gilt entsprechend für den Fall einer reinen Aussendung 3 bzw. Weiterleitung 4 periodischer Statusinformationen. Damit werden die Statusinformationen, die z.B. von einem Endgerät MT4 stammen, durch ein Endgerät MT5, das diese Informationen empfängt, nicht einfach durch ein Duplizieren und Versenden der entsprechenden Datenpakete an andere Endgeräte MT6, MT7 weitergeleitet. Würde solch eine einfache Repeater-Funktion in den Endgeräten Mt1, MT2,...MT7 vorgesehen, so könnte es unter Umständen zur Bildung von Schleifen innerhalb des Netzes kommen, welche wiederum zur Bindung einer erheblichen Menge von Systemressourcen bzw. Übertragungskapazitäten innerhalb des Datenfunknetzes führen könnte.

Daher wird vorgesehen, dass die von einem Endgerät MT5 empfangenen Datenpakete ausgewertet werden und komprimierte Statusinformationen erzeugt und weitergeleitet werden. Dabei können empfangene Statusinformationen wie z.B. die Informationen verschiedener, räumlich benachbarter Endgeräte MT1, MT2, MT3 "Geschwindigkeit für Fahrzeug Vi gleich Null bei Position XY" mit gespeicherten Statusszenarien verglichen werden und so eine komprimierte Statusinformation "Stau bei Position XY" erzeugt werden. Die Fahrzeugsituation und/oder die lokale Verkehrssituation für die Fahrzeuge Vi, i=1, 2,...n, deren Darstellung anhand von Statusinformationen durch die Endgeräte MT1, MT2, MT3 weitergeleitet wird, wird also nach dem Empfang im Endgerät MT4 zu einer regionalen oder globalen Verkehrssituation verdichtet, die in der Regel viel kompakter im Rahmen von Statusinformationen dargestellt werden kann als die Summe der einzelnen lokalen Verkehrssituationen. Das Endgerät MT4 sendet dann im Rahmen der nächsten regelmäßigen Aussendung von Datenpaketen nicht nur die Statusinformationen für das zugehörige Fahrzeug Vi, sondern auch die komprimierten Statusinformationen. Somit kann ein Überfluten des entsprechenden Übertragungsmediums mit redundanten Informationen vermieden. Es wird vielmehr eine Weiterleitung der Daten ermöglicht, ohne dass eine übermäßige Datenlast auf dem Übertragungsmedium generiert wird.

## Patentansprüche

1. Verfahren zum Austausch von Statusinformationen enthaltenden Datenpaketen zwischen Teilnehmer-Endgeräten (MT1, MT2, ...MT7) eines Datenfunksystems,
dass die Übertragung der Datenpakete zu definierten Sendezeitpunkten über direkte Funkverbindungen zwischen einem ersten, sendenden Teilnehmer-Endgerät (MT1, MT2, ...MT7) und mindestens einem zweiten, empfangenden Teilnehmer-Endgerät (MT1, MT2, ...MT7) erfolgt, und
dass zumindest ein Teil der Statusinformationen in jedem Teilnehmer-Endgerät (MT1, MT2, ...MT7) bis zum nächsten Sendezeitpunkt aktualisiert und in Form von Datenpaketen von jedem Teilnehmer-Endgerät (MT1, MT2, ...MT7) in regelmäßigen Zeitintervallen ausgesendet und/oder weitergeleitet wird,
**dadurch gekennzeichnet,**
**dass** in jedem Teilnehmer-Endgerät (MT1, MT2, ...MT7) Statusinformationen unterschiedlicher Priorität definiert werden, wobei Statusinformationen niedrigerer Priorität in regelmäßigen Zeitintervallen ausgesendet und/oder weitergeleitet werden und Statusinformationen hoher Priorität unverzüglich ausgesendet und/oder weitergeleitet werden.

2. Verfahren nach Anspruch 1,
**dadurch gekennzeichnet,**
**dass** in jedem Teilnehmer-Endgerät (MT1, MT2, ...MT7) auf Basis von bereits vorhandenen Statusinformationen und/oder den zwischen zwei Sendezeitpunkten von mindestens einem weiteren Teilnehmer-Endgerät (MT1, MT2, ...MT7) empfangenen Statusinformationen eine Auswertung der Statusinformationen durchgeführt wird, in Abhängigkeit von dem Ergebnis der Auswertung aktualisierte, komprimierte Statusinformationen generiert werden und die aktualisierten, komprimierten Statusinformationen zum nächsten Sendezeitpunkt ausgesendet werden.

3. Verfahren nach Anspruch 2,
**dadurch gekennzeichnet, dass** zur Aktualisierung und Komprimierung der Statusinformationen die vorliegenden und/oder empfangenen Statusinformationen mit gespeicherten Statusszenarien verglichen und mindestens einem der gespeicherten Statusszenarien zugeordnet werden und die Statusinformationen des entsprechenden Statusszenarios als komprimierte Statusinformationen weitergeleitet werden.

4. Verfahren nach einem der Ansprüche 1 bis 3,
**dadurch gekennzeichnet,**
**dass** die Statusinformationen Informationen über den aktuellen und/oder historischen Status eines Fahrzeuges (V1, V2, ...V6) enthalten.

5. Verfahren nach Anspruch 4,
**dadurch gekennzeichnet,**
**dass** die Statusinformationen des Fahrzeuges (V1, V2, ...V6) zumindest Informationen mit niedrigerer Priorität über mindestens einen Teil des Fahrtverlaufes und der Umgebungssituation des Fahrzeuges (V1, V2, ...V6) enthalten.

6. Verfahren nach Anspruch 4 oder 5,
**dadurch gekennzeichnet,**
**dass** bei Auftreten einer Notfallsituation Statusinformationen (5) mit hoher Priorität ausgesendet werden, die zumindest Informationen über die Notfallart und über mindestens einen Teil des Fahrtverlaufes des Fahrzeuges (V1 V2, ...V6) enthalten.

7. Verfahren nach einem der Ansprüche 4 bis 6,
**dadurch gekennzeichnet,**
**dass** die Statusinformationen zusätzlich Informationen über Datenfunkverbindungen zu anderen Teilnehmer-Endgeräten (MT1, MT2, ...MT7) enthalten.

8. Teilnehmer-Endgerät (MT1, MT2, ...MT7) zum Austausch von Statusinformationen enthaltenden Datenpaketen mit weiteren Teilnehmer-Endgeräten (MT1, MT2, ...MT7) eines Datenfunksystems,
**aufweisend**
eine Einrichtung (DX/DF-Unit) zum Datenaustausch über direkte Funkverbindungen mit weiteren Teilnehmer-Endgeräten (MT1, MT2, ...MT7) zu definierten Sendezeitpunkten, und
eine Einrichtung (DE/DC-Unit) zum Aktualisieren von zumindest einem Teil der Statusinformationen bis zum nächsten Sendezeitpunkt und zum Definieren von Statusinformationen unterschiedlicher Prioritäten,
wobei Statusinformationen niedrigerer Priorität in regelmäßigen Zeitintervallen mittels der Einrichtung (DX/DF-Unit) zum Datenaustausch ausgesendet und/oder weitergeleitet werden und Statusinformationen hoher Priorität unverzüglich ausgesendet und/oder weitergeleitet werden.

9. Teilnehmer-Endgerät nach Anspruch 8,
aufweisend
eine Einrichtung (DE/DC-Unit) zur Auswertung von empfangenen Statusinformationen,
eine Einrichtung (DE/DC-Unit) zur Generierung komprimierter Statusinformationen in Abhängigkeit von dem Ergebnis der Auswertung und
eine Einrichtung (DX/DF-Unit) zur Weiterleitung der komprimierten Statusinformationen an mindestens ein drittes Teilnehmer-Endgerät (MT1, MT2, ...MT7).

10. Teilnehmer-Endgerät nach Anspruch 8,
**dadurch gekennzeichnet,**
**dass** eine datentechnische Verbindung (2) von dem Teilnehmer-Endgerät (MT1, MT2, ...MT7) zu einer Einrichtung (Sensor/Database) zur Erfassung von Statusinformationen über den aktuellen und/oder historischen Status eines Fahrzeuges (V1 V2, ...V6) vorgesehen ist.

## Revendications

1. Procédé pour échanger des paquets de données qui contiennent des informations d'état entre des terminaux d'abonné (MT1, MT2, ..., MT7) d'un système de radiocommunication de données,
dans lequel la transmission des paquets de données s'effectue à des instants d'émission définis par des liaisons de radiocommunication directe entre un premier terminal d'abonné émetteur (MT1, MT2, ..., MT7) et au moins un deuxième terminal d'abonné récepteur (MT1, MT2, ..., MT7), et
au moins une partie des informations d'état étant mise à jour dans chaque terminal d'abonné (MT1, MT2, ..., MT7) jusqu'au prochain instant d'émission et étant émise et/ou retransmise sous forme de paquets de données par chaque terminal d'abonné (MT1, MT2, ..., MT7) à des intervalles de temps réguliers,
**caractérisé en ce que**
dans chaque terminal d'abonné (MT1, MT2, ..., MT7), on définit des informations d'état avec différentes priorités, les informations d'état à priorité basse étant émises et/ou retransmises à des intervalles de temps réguliers et les informations d'état à priorité haute étant émises et/ou retransmises immédiatement.

2. Procédé selon la revendication 1,
**caractérisé en ce que**
dans chaque terminal d'abonné (MT1, MT2, ..., MT7), une évaluation des informations d'état est réalisée sur base d'informations d'état déjà présentes et/ou des informations d'état reçues entre deux instants d'émission par au moins un autre terminal d'abonné (MT1, MT2, ..., MT7), en fonction du résultat de l'évaluation, des informations d'état mises à jour et comprimées sont créées et les informations d'état mises à jour et comprimées sont émises lors de l'instant d'émission suivant.

3. Procédé selon la revendication 2,
**caractérisé en ce que**
pour l'actualisation et la compression des informations d'état, les informations d'état présentes et/ou reçues sont comparées à des scénarios d'état conservés en mémoire et sont associées à au moins l'un des scénarios d'état conservés en mémoire, les informations d'état du scénario d'état correspondant étant retransmises sous la forme d'informations d'état comprimées.

4. Procédé selon l'une des revendications 1 à 3,
**caractérisé en ce que**
les informations d'état contiennent des informations sur l'état présent et/ou sur l'historique de l'état d'un véhicule (V1, V2, ..., V6).

5. Procédé selon la revendication 4,
**caractérisé en ce que**
les informations d'état du véhicule (V1, V2, ..., V6) contiennent au moins des informations à priorité basse sur au moins une partie du déroulement du voyage et de la situation de l'environnement du véhicule (V1, V2, ..., V6).

6. Procédé selon les revendications 4 ou 5,
**caractérisé en ce**
**qu'**en cas d'une situation d'urgence, des informations d'état (5) à priorité haute sont émises et contiennent au moins des informations sur le type d'urgence et sur au moins une partie du déroulement du voyage du véhicule (V1, V2, ..., V6).

7. Procédé selon l'une des revendications 4 à 6,
**caractérisé en ce que**
les informations d'état contiennent de plus des informations sur les liaisons de radiocommunication de données avec d'autres terminaux d'abonné (MT1, MT2, ..., MT7).

8. Terminal d'abonné (MT1, MT2, ..., MT7) pour échanger des paquets de données qui contiennent des informations d'état avec d'autres terminaux d'abonné (MT1, MT2, ..., MT7) d'un système de radiocommunication de données,
qui présente
un dispositif (unité DX/DF) d'échange de données par des liaisons radio directes avec d'autres terminaux d'abonné (MT1, MT2, ..., MT7) en des instants définis d'émission, et un dispositif (unité DE/DC) pour mettre à jour au moins une partie des informations d'état jusqu'à l'instant d'émission suivant et pour définir des informations d'état avec différentes priorités, les informations d'état à priorité basse étant émises et/ou retransmises à des intervalles de temps réguliers au moyen du dispositif (unité DX/DF) d'échange de données, et des informations d'état à priorité haute étant émises et/ou retransmises immédiatement.

9. Terminal d'abonné selon la revendication 8,
qui présente
un dispositif (unité DE/DC) d'évaluation des informations d'état reçues,
un dispositif (unité DE/DC) pour créer des informations d'état comprimées en fonction du résultat de l'évaluation et
un dispositif (unité DX/DF) de retransmission des informations d'état comprimées à au moins un troisième terminal d'abonné (MT1, MT2, ..., MT7).

10. Terminal d'abonné selon la revendication 8,
**caractérisé en ce**
**qu'**une liaison de données (2) entre le terminal d'abonné (MT1, MT2, ..., MT7) et un dispositif (détecteur/base de données) de saisie d'informations d'état qui concernent l'état actuel et/ou historique de l'état d'un véhicule (V1, V2, ..., V6) est prévue.

## Claims

1. Method for exchanging data packets containing status information between subscriber terminal devices (MT1, MT2, ...MT7) of a data radio system, whereby
the transmission of the data packets takes place at defined send times by way of direct radio links between a first, sending subscriber terminal device (MT1, MT2, ...MT7) and at least one second, receiving subscriber terminal device (MT1, MT2, ...MT7), and
at least one part of the status information in each subscriber terminal device (MT1, MT2, ...MT7) is updated up to the next send time and sent out and/or forwarded in the form of data packets by each subscriber terminal device (MT1, MT2, ...MT7) at regular time intervals,
**characterised in that**
status information items having differing priorities are defined in each subscriber terminal device (MT1, MT2, ...MT7), whereby status information items having a lower priority are sent out and/or forwarded at regular time intervals and status information items having a higher priority are sent out and/or forwarded immediately.

2. Method according to Claim 1,
**characterised in that**
an evaluation of the status information is performed in each subscriber terminal device (MT1, MT2, ...MT7) on the basis of previously available status information and/or the status information received from at least one further subscriber terminal device (MT1, MT2, ...MT7) between two send times, updated compressed status information is generated depending on the result of the evaluation, and the updated compressed status information is sent out at the next send time.

3. Method according to Claim 2,
**characterised in that**
for purposes of updating and compressing the status information the existing and/or received status information sets can be compared with stored status scenarios and assigned to at least one of the stored status scenarios, and the status information for the corresponding status scenario is forwarded as compressed status information.

4. Method according to one of Claims 1 to 3,
**characterised in that**
status information contains information about the current and/or the historical status of a vehicle (V1, V2, ...V6).

5. Method according to Claim 4,
**characterised in that**
the status information for the vehicle (V1, V2, ...V6) contains at least information having a lower priority relating to at least one part of the progress of the journey and the ambient situation of the vehicle (V1, V2, ...V6).

6. Method according to Claim 4 or 5,
**characterised in that**
upon the occurrence of an emergency situation status information (5) having a high priority is sent out containing at least information about the type of emergency and about at least a part of the progress of the journey of the vehicle (V1, V2, ...V6).

7. Method according to one of Claims 4 to 6,
**characterised in that**
the status information additionally contains information relating to data radio links with other subscriber terminal devices (MT1, MT2, ...MT7).

8. Subscriber terminal device (MT1, MT2, ...MT7) for exchanging data packets containing status information with further subscriber terminal devices (MT1, MT2, ...MT7) of a data radio system, comprising
a facility (DX/DF Unit) for data exchange by way of direct radio links with further subscriber terminal devices (MT1, MT2, ...MT7) at defined send times, and
a facility (DE/DC Unit) for updating at least one part of the status information up to the next send time and for defining status information items having differing priorities,
whereby status information items having a lower priority are sent out and/or forwarded at regular time intervals using the facility (DX/DF Unit) for data exchange and status information items having a higher priority are sent out and/or forwarded immediately.

9. Subscriber terminal device according to Claim 8, comprising
a facility (DE/DC Unit) for evaluating received status information, a facility (DE/DC Unit) for generating compressed status information depending on the result of the evaluation, and
a facility (DX/DF Unit) for forwarding the compressed status information to at least one third subscriber terminal device (MT1, MT2, ...MT7).

10. Subscriber terminal device according to Claim 8,
**characterised in that**
a data link (2) is provided from the subscriber terminal device (MT1, MT2, ...MT7) to a facility (sensor/database) in order to acquire status information about the current and/or historical status of a vehicle (V1, V2, ...V6).
